Europäisches Patentamt

European Patent Office

Office européen des brevets

(11) Veröffentlichungsnummer: **0 095 675**
**B1**

# EUROPÄISCHE PATENTSCHRIFT

(45) Veröffentlichungstag der Patentschrift: **11.02.87**

(21) Anmeldenummer: **83104987.9**

(22) Anmeldetag: **20.05.83**

(51) Int. Cl.⁴: **H 04 Q 3/54, H 04 Q 3/62**

(54) **Schaltungsanordnung für eine Fernsprechvermittlungsanlage mit verbindungsindividuellen Leitungsübertragungen.**

(30) Priorität: **01.06.82 DE 3220511**

(43) Veröffentlichungstag der Anmeldung:
**07.12.83 Patentblatt 83/49**

(45) Bekanntmachung des Hinweises auf die Patenterteilung:
**11.02.87 Patentblatt 87/07**

(84) Benannte Vertragsstaaten:
**AT BE GB IT**

(56) Entgegenhaltungen:
EP-A-0 022 163
FR-A-2 418 597
US-A-4 138 599

NACHRICHTENTECHNISCHE ZEITSCHRIFT,
Band 29, Nr. 8, August 1976, Seiten 585-591,
Berlin, DE; R. ADLER: "EWSF - die
Fernwähltechnik im Elektronischen
Fernsprech-Wählsystem der Deutschen
Bundespost"

(73) Patentinhaber: **Telefonbau und Normalzeit GmbH**
**Mainzer Landstrasse 128-146 Postfach 4432**
**D-6000 Frankfurt (Main) (DE)**

(72) Erfinder: **Burkart, Peter**
**Otto-Hahn-Strasse 7**
**D-6082 Mörfelden-Walldorf (DE)**
Erfinder: **Hagedorn, Achim**
**Hessenring 28**
**D-6200 Wiesbaden 1 (DE)**

(56) Entgegenhaltungen:
INTERNATIONAL CONFERENCE ON PRIVATE
ELECTRONIC SWITCHING SYSTEMS, 10.-12.
April 1978, Seiten 169-172, London, GB; A.J.
BARR et al.: "An application of
microprocessors to a private automatic branch
exchange"

Courier Press, Leamington Spa, England.

## 0 095 675

**Beschreibung**

Die Erfindung betrifft eine Schaltungsanordnung für eine Fernsprechvermittlungsanlage mit verbindungsindividuellen Leitungsübertragungen zur Aufnahme und Abgabe von Schaltkennzeichen, wobei jeweils mehrere Leitungsübertragungen über gemeinsame Datenvielfachleitungen mit einer fest zugeordneten Teilsteuereinrichtung verbunden sind, welche zur Übermittlung von Informationen über auf der jeweiligen Verbindungsleitung auftretenden Schaltkennzeichen und zur Übermittlung von Befehlen zu den Leitungsübertragungen zur Abgabe von Schaltkennzeichen zur bzw. von der Teilsteuereinrichtung dienen, durch die Teilsteuereinrichtungen, welche an einer übergeordneten Steuereinrichtung angeschlossen sind, eine Bearbeitung der eintreffenden Informationen vor ihrer Weitergabe an die übergeordnete Steuereinrichtung und umgekehrt stattfindet, und für eine Vielzahl von Arten von Verbindungsleitungen mit unterschiedlicher Kennzeichengabe unterschiedliche Leitungsübertragungen und eine Art von Teilsteuereinrichtung vorgesehen ist.

Eine derartige Schaltungsanordnung ist bereits bekannt. So wird sowohl in der Nachrichtentechnische Zeitschrift, Band 29, Nr. 8, August 1976, Seiten 585—591 als auch in der DE—A—28 12 907 eine Schaltungsanordnung für Fernmeldevermittlungsanlagen, insbesondere Fernsprechvermittlungsanlagen mit verbindungsindividuellen Schalteinrichtungen und mit ihnen gemeinsamen Teilsteuerwerken beschrieben, bei welcher die verbindungsindividuellen Schalteinrichtungen und das Teilsteuerwerk über eine gemeinsame mehradrige Leitung miteinander verbunden sind, wobei dieses Leitungsvielfach zur Übertragung sowohl von Informationen von den individuellen Schalteinrichtungen zum Teilsteuerwerk als auch von Befehlen in umgekehrter Richtung benutzt wird. Mit Hilfe von Anschalteeinrichtungen wird das Teilsteuerwerk mit den einzelnen Indikationsstellen in den Schalteinrichtungen direkt verbunden, wobei die Auswertung der eintreffenden Signale in dem Teilsteuerwerk selbst stattfindet.

Zu den auf den Verbindungsleitungen auftretenden Schaltkennzeichen gehören auch Wahlinformationen, die beispielsweise in Form von Nummernschalterimpulsen übertragen werden. In der DE—B—23 31 602 ist eine Schaltungsanordnung für eine indirekt gesteuerte Fernsprechvermittlungsanlage mit verbindungssätzen bekannt, wobei jeder Verbindungssatz mit einem Steuerwerk, einem Rechenwerk und einem Programmspeicher versehen ist. Eine derartige Anordnung wird auch als Mikroprozessor bezeichnet. In dem Verbindungssatz erfolgt eine Aufnahme und Auswertung der Schaltkennzeichen, ebenso eine Erzeugung von auszusendenden Schaltkennzeichen. Derartige Verbindungssätze sind über übergeordnete Register mit einer gemeinsamen Steuereinrichtung der Fernsprechvermittlungsanlage verbunden, welche die von den Verbindungssätzen eintreffenden Informationen auswertet und die Aussendung von Schaltkennzeichen veranlaßt. Der Vorteil eines derartigen mikroprozessor-gesteuerten Verbindungssatzes liegt darin, daß durch eine Programmänderung der Mikroprozessor an unterschiedliche Aufgaben auf eine einfache Weise anpaßbar ist.

In der Fernsprechvermittlungstechnik, insbesondere auch bei Fernsprechnebenstellenanlagen gibt es eine Reihe von unterschiedlichen Verfahren zum Betreiben von Verbindungsleitungen zwischen einer Fernsprechnebenstellenanlage und der Vermittlungsstelle, wobei diese Verfahren sich jeweils durch eine unterschiedliche Kennzeichengabe unterscheiden. Die Schaltungsanordnung gemäß der eingangs erwähnten DE—B—23 31 602 ermöglicht zwar das Betreiben unterschiedlicher Leitungsübertragungen in Verbindung mit einer gemeinsamen Teilsteuereinrichtung, das Betreiben einer Leitungsübertragung mit unterschiedlicher Kennzeichengabe erfordert jedoch nicht nur eine spezielle Leitungsübertragung, sondern auch eine Änderung des Teilsteuerwerks, da dort die Potentialauswertung stattfindet.

Die Aufgabe der Erfindung besteht nun darin, eine Schaltungsanordnung zum Betreiben einer Leitungsübertragung anzugeben, welche einerseits eine Anpassung an die jeweiligen Leitungsverhältnisse und Schaltkennzeichen einer Verbindungsleitung auf einfache Weise ermöglicht und andererseits infolge der unterschiedlichen Schaltkennzeichengabe in der übergeordneten Steuereinrichtung die Steuerungsabläufe nicht kompliziert.

Diese Aufgabe wird dadurch gelöst, daß die Teilsteuereinrichtung für die unterschiedlichen Arten von Leitungsübertragungen eine universelle Schnittstelle zur übergeordneten Steuereinrichtung aufweist, wobei zusätzlich zu den Datenvielfachleitungen mehrere Adreßleitungen zum Ansteuern einer bestimmten Leitungsübertragung vorgesehen sind, daß im Falle der Ansteuerung eine Rückmeldung durch die betreffende Leitungsübertragung erfolgt, indem über die Datenvielfachleitungen ein Kennwort an die Teilsteuereinrichtung gesendet wird, welches auf die Art der Leitungsübertragung hinweist, daß die Übermittlung von Informationen von den Leitungsübertragungen und Befehlen für die Leitungsübertragungen zwischen den Teilsteuereinrichtungen und der Steuereinrichtung in Form von für alle Arten von Leitungsübertragungen einheitlichen Codeworten erfolgt, wobei in den Teilsteuereinrichtungen eine entsprechende Umwandlung durchgeführt wird, und daß in der Teilsteuereinrichtung die von den Leitungsübertragungen eintreffenden Informationen in Codeworte bzw. Sie von der Steuereinrichtung eintreffenden Codeworte in Befehle für die Leitungsübertragung mit Hilfe einer in einem Speicher enthaltenen Tabelle umgesetzt werden.

Durch die universelle Schnittstelle ist es möglich, verschiedene Leitungsübertragungen für unterschiedliche Kennzeichengabe in Verbindung mit der Teilsteuereinrichtung zu betreiben, wobei bei einer Informationsübertragung von einer Leitungsübertragung das Kennwort mit übertragen wird, welches auf die Art der Kennzeichengabe hinweist.

Die Schaltungsanordnung gemäß der eingangs genannten DE—A—28 12 907 ist nicht ohne weiteres zum Betreiben von Leitungsübertragungen für Verbindungsleitungen mit unterschiedlicher Kennzeichengabe einsetzbar, da das zugeordnete Teilsteuerwerk besondere Einrichtungen (beispielsweise Vergleichspotentiale für für von den Leitungsübertragungen eintreffenden Signale) benötigt, die bei dem Einsatz von Leitungsübertragungen für Leitungen mit einer anderen Kennzeichengabe entsprechend geändert werden müßten.

Die Verwendung eines Identitätskennzeichens, welches von einer Leitungsübertragung zu einer Steuereinrichtung gesendet wird, ist ansich bereits bekannt, So wird in der US—A—4,138,599 ein modulares Fernmeldesystem beschrieben, bei welchem jede Leitungsübertragung eine individuelle Kennung in Verbindung mit einem PCM-Wort über den Signalisierungskanal an die übergeordnete Steuereinrichtung sendet. Obwohl auch bei dieser bekannten Fernmeldeanlage jeweils mehrere Leitungsübertragungen einer Teilsteuereinrichtung zugeordnet sind, wird das Identitätskennzeichen nicht im Rahmen der Übermittlung von Informationen und Befehlen zwischen einer Leitungsübertragung und der Teilsteuereinrichtung benutzt.

Weitere Vorteile ergeben sich aus den Unteransprüchen.

Die Erfindung wird anhand eines Ausführungsbeispiels näher erläutert, welches in der Zeichnung dargestellt ist.

Es zeigt

Fig. 1 einen Ausschnitt aus einem Blockschaltbild einer Fernsprechvermittlungsanlage,

Fig. 2 eine Schaltungsanordnung für eine Leitungsübertragung für Hauptanschlußkennzeichen und

Fig. 3 eine Schaltungsanordnung für eine Leitungsübertragung für Impulskennzeichen.

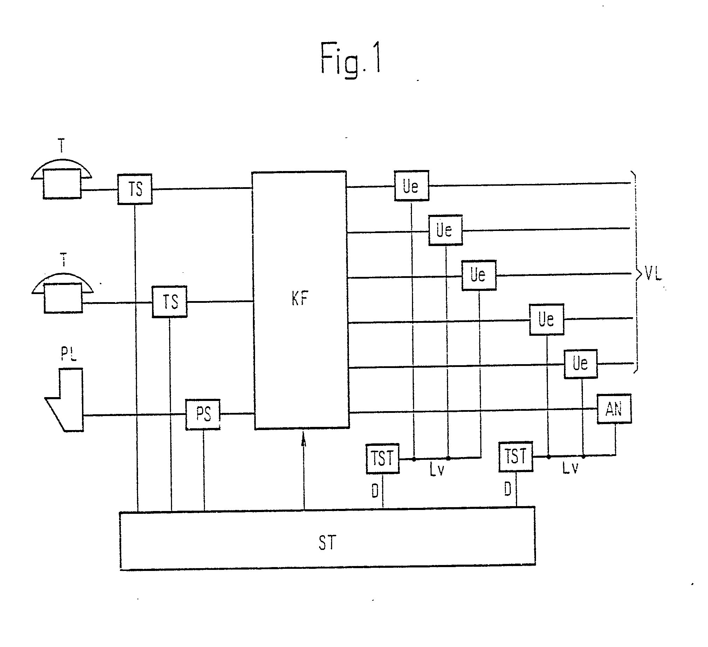

Bei dem Blockschaltbild einer Fernsprechvermittlungsanlage (Fig. 1) sind nur diejenigen Einrichtungen gezeigt, die zum Verständnis der Erfindung unbedingt notwendig sind. An einem Koppelfeld KF sind Teilnehmerstationen T über Teilnehmeranschlußschaltungen TS, ein Vermittlungsplatz PL über eine Platzsteuerung PS und Leitungsübertragungen Ue zum Anschluß von Verbindungsleitungen VL angeschlossen. Die Verbindungsleitungen dienen zur Abwicklung des Externverkehrs mit einer nicht gezeigten Vermittlungsstelle.

Jeweils mehrere bei dem Ausführungsbeispiel 3 Leitungsübertragungen Ue sind über ein Leitungsvielfach LV mit einer Teilsteuereinrichtung TST, welche an der übergeordneten Steuereinrichtung ST durch das Datenvielfach DV angeschlossen ist, verbunden. Die Steuereinrichtung ST steuert den Verbindungsauf- u.-abbau innerhalb der Fernsprechvermittlungsanlage aufgrund von Leitungskriterien, die auf den Anschluß- und Verbindungsleitungen eintreffen. Die Verbindung zwischen Verbindungsleitungen und Anschlußleitungen bzw. von Anschlußleitungen untereinander erfolgt auf Veranlassung der Steuereinrichtung ST durch das Koppelfeld KF.

Bei den Leitungsübertragungen Ue handelt es sich um sogenannte Amtsleitungsübertragungen, Querleitungsübertragungen, usw. Anstelle von Leitungsübertragungen Ue können auch Ansagegeräte AN, Konferenzeinrichtungen usw. am Leitungsvielfach LV angeschlossen sein.

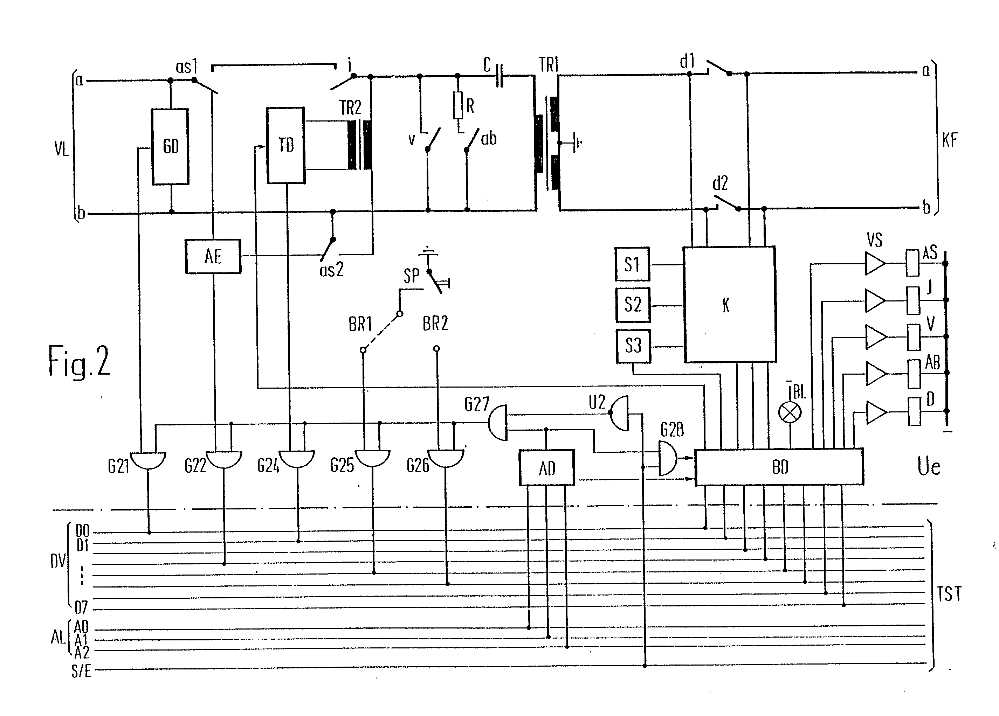

Das Leitungsvielfach LV besteht aus Datenleitungen DV, Adressleitungen AL und einer Steuerleitung S/E zur Steuerung von Senden und Empfang (s. Fig. 2). Das Datenvielfach DV, welches aus den Datenleitungen D0 bis 7 gebildet wird, dient zur Übermittlung von Befehlen von der Teilsteuereinrichtung TST zur Leitungsübertragung Ue und zur Übermittlung von Informationen von der Leitungsübertragung Ue zur Teilsteuereinrichtung TST. Über das Adressvielfach AL bestehend aus den Adressleitungen A0 bis A2 erfolgt die Adressierung der jeweiligen Leitungsübertragung Ue. Dabei ist zu bemerken, daß mit den höherwertigeren Stellen die individuelle Adressierung der einzelnen Leitungsübertragungen Ue erfolgt, während mit Hilfe der niederwertigeren Bitstellen der Adresse eine Unterscheidungsmöglichkeit für die auf dem Datenvielfach DV übertragenen Informationen gegeben ist.

An dem Adressvielfach AL ist ein Adressdecoder AD angeschlossen, welcher bei einer Adressierung der betreffenden Leitungsübertragung Ue sowohl die Gatter zur Übermittlung einer Information auf das Datenvielfach DV als auch einen Befehlsdecoder BD zur Aufnahme und Decodierung eines über das Datenvielfach DV übertragenen Befehls vorbereitend freigibt. Die Unterscheidung, ob eine Information zur Teilsteuereinrichtung TST gesendet oder ein Befehl von dort empfangen werden soll, wird über die Leitung S/E gesteuert, wobei die jeweilige Entscheidung durch die Teilsteuereinrichtung TST getroffen wird.

Die vorbereitende Freigabe der Gatter und des Befehlsdecoders BD erfolgt überr die UND-Gatter G27 und G28, wobei die endgültige Freigabe über die Leitung S/E erfolgt, welche je nach Potential entweder das Gatter G27 oder das Gatter G28 freigibt. Erfolgt eine Adressierung einer Leitungsübertragung Ue und ist das Datenvielfach DV zur Informationsübertragung an die Teilsteuereinrichtung TST freigegeben (Leitung S/E), so gelangt in jedem Fall ein Signal auf die Leitung D4 bzw. D5 des Datenvielfachs DV, und zwar über die Gatter G25 bzw. G26. Durch dieses Signal wird der Teilsteuereinrichtung TST die Art der Schaltkennzeichengabe der betreffenden Leitungsübertragung Ue mitgeteilt. Mit Hilfe einer Drahtbrücke oder eines Schalters BR1 bzw. BR2 kann die Art der Schaltkennzeichengabe zusätzlich eingestellt werden, wenn es sich wie bei dem vorliegenden Beispiel um eine Leitungsübertragung für Schleifenkennzeichen handelt, bei welcher sowhol eine Wahlinformationsübertragung nach dem Nummernschalterverfahren als auch nach dem Mehrfrequenzverfahren möglich ist. Je nach Art der Wahlinformationsübertragung erfolgt die Meldung auf der Leitung D4 oder D5. Mit den UND-Gattern G25 bzw. G26 ist auch die Sperrtaste SP verbunden, welche im betätigten Zustand die betreffende Leitungsübertragung Ue sperrt, d. h. die

3

Aussendung einer Kennung auf den Leitungen D4 bzw. D5 verhindert. Auf diese Weise wird der Teilsteuereinrichtung TST mitgeteilt, daß die betreffende Leitungsübertragung UE nicht betriebsbereit ist.

Am Befehlsdecoder ist eine Koppeleinrichtung K angeschlossen, welche die Verbindung von Sendeeinrichtungen S1, S2, S3 mit den Sprechadern a/b ermöglicht. Bei diesen Sendeeinrichtungen kann es sich beispielsweise um solche für Hörtöne und auch für MFV-(Mehrfrequenzverfahren-)Signalen handeln. Über den Befehlsdecoder BD erfolgt die Ansteuerung des Koppelfeldes K und damit die Auswahl der betreffenden Sendeeinrichtung. Weiterhin sind an dem Befehlsdecoder über entsprechende Verstärker VS eine Reihe von Relais angeschlossen, welche zur Durchführung von Schaltvorgängen benötigt werden. Außerdem ist mit dem Befehlsdecoder BD eine Besetztlampe BL verbunden, welche den Besetztzustand der Leitungsübertragung dem Wartungspersonal anzeigt. Die bisher beschriebenen Einrichtungen einer Leitungsübertragung Ue sind bei allen Leitungsübertragungen unabhängig von der Art der Kennzeichengabe vorhanden.

Durch eine zyklische Adressierung der einzelnen Leitungsübertragungen Ue durch die Teilsteuereinrichtung TST in kurzen Zeitabständen wird sichergestellt, daß Informationen aufgrund eines in einer Leitungsübertragung Ue eingetroffenen Schaltkennzeichens ohne großen Zeitverzug an die Teilsteuereinrichtung TST weiter gegeben werden. Die Adressierung einer Leitungsübertragung Ue zum Zwecke der Befehlsübermittlung erfolgt bedarfsweise.

Zwischen der Teilsteuereinrichtung TST und der Steuereinrichtung ST erfolgt die Übermittlung von Codeworten, welche Informationen von den Leitungsübertragungen Ue und Befehle für die Leitungsübertragungen Ue enthalten. Die Informationen werden von der übergeordneten Steuereinrichtung ST verarbeitet und dienen zur Erzeugung von Befehlen, die von der Steuereinrichtung ST an die Teilsteuereinrichtung TST zurückgesandt werden. Zusätzlich zu jedem Codewort wird ebenfalls in beiden Richtungen die Adresse der betreffenden Leitungsübertragung Ue übermittelt. Aus dieser Adresse geht nicht hervor, um welche Art von Leitungsübertragung es sich dabei handelt. Die Bedeutung der einzelnen Codeworte ist ebenfalls neutral, d. h. auch diese gibt keinerlei Hinweise auf eine besondere Art der Kennzeichengabe. Das bedeutet, daß für alle Arten von Leitungsübertragungen für jede Phase des Verbindungsauf- und -abbaus bestimmte Codeworte übermittelt werden.

In der Teilsteuereinrichtung TST erfolgt die leitungsübertragungsspezifische Bearbeitung dadurch, daß die von den Leitungsübertragungen Ue eintreffenden Informationen derart umgewandelt werden, daß diese jeweils in ein bestimmtes, eine Phase des Verbindungsauf- oder -abbaues kennzeichnenden Codewortes umgewandelt werden, welches anschließend zur Steuereinrichtung ST gesendet wird. Das gleiche geschieht im umgekehrter Weise mit den Befehlen, wobei die Bedeutung des Codewortes unter Berücksichtigung der betreffenden Leitungsübertragung, an welche der Befehl zu senden ist, eine entsprechende Umwandlung stattfindet. Zu diesem Zweck weist die Teilsteuereinrichtung TST neben einem Arbeitsspeicher zur Kennzeichnung von Betriebs- und Schaltzuständen der einzelnen Leitungsübertragungen auch einen oder mehrere Festwertspeicher auf, wobei ein gemeinsamer Festwertspeicher in mehrere Speicherbereiche aufgeteilt ist. Für jede Art von Leitungsübertragung ist nun entweder ein bestimmter Speicherbereich oder ein individueller Festwertspeicher vorgesehen. Diese Speicher bzw. Speicherbereiche enthalten Tabellen, welche zur Umwandlung von leitungsübertragungsspezifischen Informationen in die bereits beschriebenen einheitlichen Codeworte und dieser Codeworte in umgekehrter Richtung in leitungsübertragungspezifische Befehle dienen. Die Programmierung der Teilsteuereinrichtung TST ist in der Regel derart universell ausgelegt, daß diese für alle Arten von Leitungsübertragungen anwendbar ist. Zur Anpassung der Teilsteuereinrichtung TST an die einzelnen Arten von Leitungsübertragungen sind lediglich die genannten Festwertspeicher für die betreffenden Leitungsübertragungsarten einzusetzen.

Auf diese Weise ist die Teilsteuereinrichtung TST leicht den jeweiligen Verhältnissen anzupassen.

Die Wirkungsweise der erfindungsgemäßen Schaltungsanordnung wird anhand von vermittlungstechnischen Vorgängen bei zwei Leitungsübertragungen mit unterschiedlicher Kennzeichengabe näher erläutert.

A. Leitungsübertragung für Hauptanschluβkennzeichen (Fig. 2)

1. <u>Senden (S)</u>

| | D7 | D6 | D5 | D4 | D3 | D2 | D1 | D0 |
|---|---|---|---|---|---|---|---|---|
| Kennung (Impulswahl) | | | X | | | | | |
| Kennung (MFV–Wahl) | | | | X | | | | |
| Anruf | | | | | X | | | |
| Wählton leigt an | | | | | | | X | |
| Gebührenimpuls | | | | | | | | X |

2. <u>Empfangen (E)</u>

AD2

| | D7 | D6 | D5 | D4 | D3 | D2 | D1 | D0 |
|---|---|---|---|---|---|---|---|---|
| Relais V | | X | | | | | | |
| Relais J | | | X | | | | | |
| Relais AS | | | | X | | | | |
| Besetztlampe | | | | | X | | | |
| Tondetektor sperren | | | | | | X | | |
| Relais D | | | | | | | | X |

AD3

| | D7 | D6 | D5 | D4 | D3 | D2 | D1 | D0 |
|---|---|---|---|---|---|---|---|---|
| Einschalten | X | | | | | | | |
| Anschalten | | X | | | | | | |
| MFV | | | | X | | | | |
| 50 Hz | | | | | | X | | |
| 425 Hz | | | | | | | | X |

| | D7 | D6 | D5 | D4 | D3 | D2 | D1 | D0 |
|---|---|---|---|---|---|---|---|---|
| F 1 | X | | | | | | | |
| F 2 | | X | | | | | | |
| F 3 | | | X | | | | | |
| F 4 | | | | X | | | | |
| F 5 | | | | | X | | | |
| F 6 | | | | | | X | | |
| F 7 | | | | | | | X | |
| F 8 | | | | | | | | X |

MFV–Sign.

(2 × 1 aus 4)

AD4

## Ankommende Belegung

Ein Anruf von der Vermittlungsstelle auf der Verbindungsleitung VL wird durch den Anruferkenner AE erkannt, welcher über die in der Ruhelage befindlichen Kontakte as1 und as2 mit den Sprechadern a/b verbunden ist. Durch ein entsprechendes Signal wird durch den Anruferkenner AE das Koinzidenzgatter G22 verbereitet, wodurch bei der Adressierung der betreffenden Leitungsübertragung Ue eine Freigabe desselben und somit die Weitergabe eines Signals auf die Leitung D3 des Datenvielfachs DV erfolgt. Diese Information gelangt an die Teilsteuereinrichtung TST, welche die betreffende Leitungsübertragung als besetzt gekennzeichent und deren Adresse zusammen mit einem Codewort zur Kennzeichnung des Anrufzustandes an die Steuereinrichtung ST weitergibt. Das Codewort hat die Bedeutung "Anruf". In der Steuereinrichtung ST erfolgt ebenfalls eine Besetztkennzeichnung der betreffenden Leitungsübertragung, die anschließend auf Veranlassung der Steuereinrichtung ST über das Koppelfeld KF mit einem Vermittlungsplatz PL verbunden wird (s. Fig. 1). Sobald die Verbindung über das Koppelfeld KF aufgebaut ist, sendet die Steuereinrichtung ST zusammen mit der Adresse der betreffenden Leitungsübertragung Ue ein Codewort mit der Bedeutung "Gesprächszustand" an die Teilsteuereinrichtung TST, welche darauf hin die Leitungsübertragung Ue über das Adressvielfach AL adressiert und über das Datenvielfach DV einen entsprechenden Befehl übermittelt. Der Befehl wird in der Leitungsübertragung Ue von einem Befehlsdecoder BD aufgenommen und hat das Ansprechen der Relais AS, D und I, die Abschaltung des Anruferkenners AE und das Einschalten der Besetztlampe BL zur Folge. Über die Kontakte d1, d2 und i erfolgt die Durchschaltung des Sprechweges (s. Fig. 2). Durch das Schließen der Schleife der Sprechadern a/b wird der Vermittlungsstelle der Gesprächszustand mitgeteilt. Der Teilnehmer der Vermittlungsstelle, welcher mit dem Vermittlungsplatz PL der Fernsprechnebenstellenanlage (s. Fig. 1) verbunden ist, kann nun seinen Verbindungswunsch mitteilen, worauf der Vermittlungsplatz PL eine Verbindung mit dem gewünschten Teilnehmer T der Fernsprechnebenstellenanlage veranlaßt, worauf im Koppelfeld KF derselbe mit der betreffenden Leitungsübertragung Ue verbunden wird.

Das Einhängen des Teilnehmers T oder das Auslösen der Verbindung durch den Vermittlungsplatz PL, wenn der gewünschte Teilnehmer nicht erreichbar ist, wird durch die Steuereinrichtung ST erkannt, welche darauf hin an die Teilsteuereinrichtung TST das Codewort mit der Bedeutung "Auslösung" für die betreffende Leitungsübertragung aussendet, worauf die Teilsteuereinrichtung TST einen entsprechenden Befehl an die Leitungsübertragung Ue in bereits beschriebener Weise übermittelt. Dieser hat den Abwurf der Relais AS, D und I zur Folge, außerdem wird der Anruferkenner AE aktiviert und die Besetztlampe BL abgeschaltet. Die Leitungsübertragung Ue, die in der Teilsteuereinrichtung TST als frei gekennzeichent worden ist, befindet sich nun wieder in der Ruhelage (s. Fig. 2).

## Abgehende Belegung

Es wird angenommen, daß ein Teilnehmer T ein Externgespräch führen möchte (s. Fig. 1). Nach Empfang der Verkehrsausscheidungsziffer in der Steuereinrichtung ST, die auf bekannte und nicht weiter zu beschreibende Weise in die Steuereinrichtung ST gelangt ist, veranlaßt die Steuereinrichtung ST die Durchschaltung einer Verbindung durch das Koppelfeld KF, worauf die Teilnehmerstation T mit einer freien Leitungsübertragung Ue verbunden ist. Gleichzeitig sendet die Steuereinrichtung ST ein entsprechendes Codewort mit der Bedeutung "Belegung" zusammen mit der Adresse der betreffenden Leitungsübertragung an die Teilsteuereinrichtung TST. Die Teilsteuereinrichtung TST kennzeichnet die betreffende Leitungsübertragung Ue in ihrem Arbeitsspeicher als besetzt und übermittelt an diese einen Befehl, welcher das Ansprechen der Relais AS und I zur Folge hat. Mit den Kontakten as1 und as2 erfolgt das Schließen der Schleife zwischen den Sprechadern a/b der Verbindungsleitung VL. Außerdem wird der Tonerkenner TD aktiviert. Sobald in der Vermittlungsstelle die Verbindungsleitung VL mit einer freien verbindungsindividuellen Einrichtung verbunden ist, sendet diese den Wählton auf die Verbindungsleitung VL, der von dem Tonerkenner TD empfangen wird. Dieser erzeugt ein entsprechendes Signal, welches das Koinzidenzgatter G24 vorbereitet. Sobald die betreffende Leitungsübertragung Ue adressiert wird, gelangt ein Signal über die Leitung D1 zur Teilsteuereinrichtung TST. In der Teilsteuereinrichtung TST wird das Auftreten des Wähltons bezüglich der betreffenden Leitungsübertragung Ue markiert und ein Befehl an diese ausgesendet, welcher die Anschaltung der Sendeeinrichtung S1 über den Koppler K an die Sprechadern a/b zur rufenden Teilnehmer zur Folge hat. Da zu diesem Zeitpunkt des Verbindungsaufbaues eine Durchschaltung der Sprechwege noch nicht möglich ist, erhält der rufende Teilnehmer auf diese Weise den Wählton, welcher ihn zur Fortsetzung der Wahlinformationseingabe auffordert. Sobald die Steuereinrichtung ST von Teilnehmer T die erste nach dem Empfang des Wähltons ausgesendete Ziffer empfängt, sendet diese ein Codewort mit der Bedeutung des betreffenden Ziffernwertes an die Teilsteuereinrichtung TST, welche darauf hin durch Aussendung eines Befehls zunächst die Abschaltung der Sendeeinrichtung S1 im Koppler K der Leitungsübertragung Ue veranlaßt. Anschließend erfolgt durch die Teilsteuereinrichtung TST durch entsprechende Befehle die impulsweise Erregung der Relais I und V, wobei das Relais I im Rhythmus der Nummernschalterimpulse die Schleife der Sprechadern a/b der Verbindungsleitung VL öffnet, die während einer Wahlimpulsserie durch das Relais V geschlossen wird. Nach Aussendung der ersten Ziffer sendet die Teilsteuereinrichtung TST einen Befehl an die Leitungsübertragung Ue, wodurch das Relais D anspricht und die Verbindung sprechadernmäßig durchschaltet. Der rufende Teilnehmer ist nun in der Lage, Hörzeichen aus der Vermittlungsstelle zu empfangen, welche ihn über die einzelnen Betriebszustande während des weiteren Verbindungsaufbaus hinweisen. Die Übermittlung und Aussendung der übrigen Ziffern der Wahlinformation erfolgt in der bereits beschriebenen Weise.

Erfolgt die Übermittlung der Wahlinformation auf die Verbindungsleitung VL nach dem MF-(Mehrfrequenz-) Verfahren, so wird durch entsprechende Befehle durch die Teilsteuereinrichtung TST die Sendeeinrichtung S3 über den Koppler K an die Sprechadern a/b geschaltet. Die Sendeeinrichtung S3, die den einzelnen Ziffernwerten zugeordneten Frequenzen auf Veranlassung der Teilsteuereinrichtung TST auf die Verbindungsleitung VL. Für die Dauer der Aussendung eines Wählkennzeichens wird das ebenso wie bei dem Impulswahlverfahren nach der Aussendung der ersten Ziffer aktivierte Relais D abgeworfen, damit die MF-Signale nicht zum Teilnehmeranschluß der Fernsprechnebenstellenanlage gelangen. Die Steuerung der einzelnen Vorgänge innerhalb der Leitungsübertragung Ue während der Aussendung der Wählkennzeichen erfolgt selbständig durch die Teilsteuereinrichtung TST, welche lediglich die Ziffernwerte der einzelnen Ziffernstellen der auszusendenden Rufnummer von der Steuereinrichtung ST in Form entsprechender Codeworte erhält, wobei die Codeworte keinerlei Hinweise darauf erhalten, in welcher Form die Aussendung der Wählkennzeichen zu erfolgen hat.

Die auf der Verbindungsleitung VL eintreffenden Gebührenimpulse werden von einem Gebührendecoder GD erkannt, welcher durch ein entsprechendes Signal über das Koinzidenzgatter G21 über die Leitung D0 des Datenvielfachs DV an die Teilsteuereinrichtung TST weitergegeben wird. Die Teilsteuereinrichtung TST gibt die entsprechende Information durch ein Codewort mit der Bedeutung "Gebührenimpuls" an die Steuereinrichtung ST weiter, wo eine Registrierung erfolgt, die in einer Aufsummierung in einem verbindungsindividuellen und einem teilnehmerindividuellen Speicher besteht.

Sobald der Teilnehmer der Fernsprechnebenstellenanlage einhängt, wird dies auf nicht näher beschriebene Weise von der Steuereinrichtung ST erkannt, welche darauf hin ein Codewort zur Teilsteuereinrichtung TST sendet. Das Codewort hat die Bedeutung "Auslösung" und dient zur Erzeugung von Befehlen, welche an die betreffende Leitungsübertragung Ue gesendet werden und dort den Abwurf der Relais AS, D und I zur Folge haben. Außerdem wird die Besetztlampe BL zum Erlöschen gebracht. Die Leitungsübertragung befindet sich nun wieder in der Ruhelage.

Geht der Teilnehmer der Fernsprechnebenstellenanlage in Rückfrage, beispielsweise durch Betätigung der Erdtaste, so wird dies auf nicht weiter beschriebene Weise durch die Steuereinrichtung ST erkannt, welche ein Codewort mit der Bedeutung "Rückfrage ein" an die Teilsteuereinrichtung TS sendet. Diese veranlaßt die Übermittlung eines Befehls zur betreffenden Leitungsübertragung Ue, welcher das Relais AB ansteuert, worauf ein Widerstand R durch den Kontakt a/b an die Sprechadern a/b angelegt wird. Außerdem wird durch einen Befehl das Relais D abgeworfen, wodurch der Teilnehmer T der Fernsprechnebenstellenanlage der Verbindungsleitung VL abgetrennt wird. Die Anschaltung des Widerstands R an die Sprechadern a/b der Verbindungsleitung VL geschieht aus übertragungstechnischen Gründen, da der Teilnehmeranschluß der Fernsprechnebenstellenanlage von der Verbindungsleitung VL abgetrennt ist. Ist die Rückfrage beendet, so sendet die Steuereinrichtung ST ein Codewort mit der Bedeutung "Rückfrage aus" an die Teilsteuereinrichtung TST, welche darauf hin durch entsprechende Befehle den Abwurf des Relais AB und das Ansprechen des Relais D veranlaßt. Damit ist der Fernsprechteilnehmer T der Fernsprechnebenstellenanlage wieder mit der Verbindungsleitung VL verbunden.

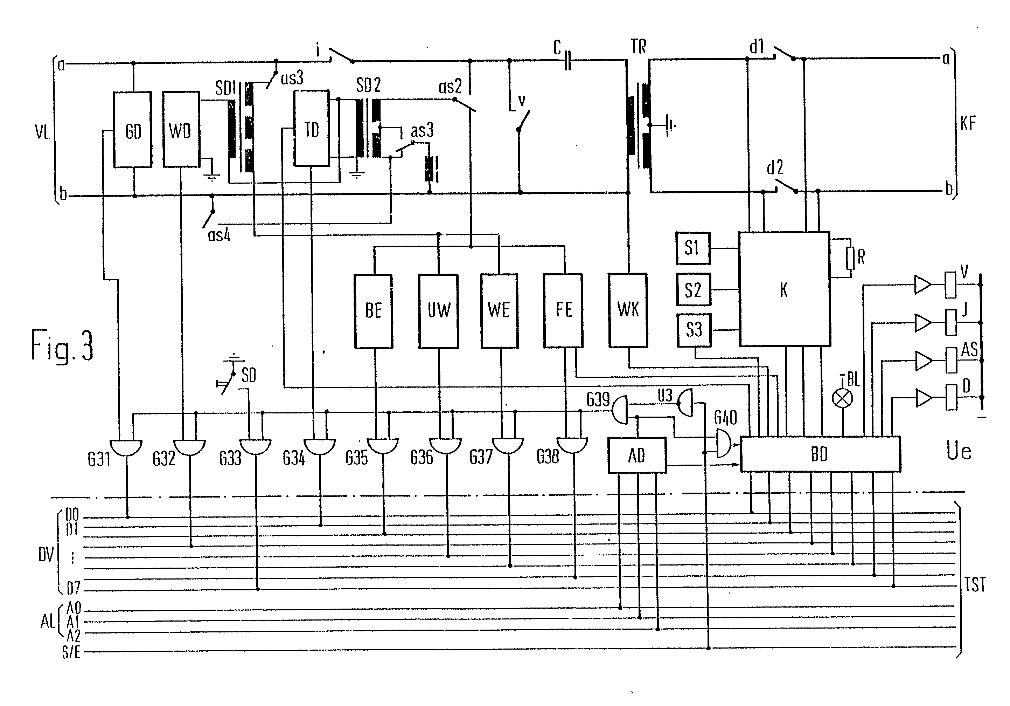

B. Impulskennzeichen (Fig. 3)

1. Senden (S)

| | D7 | D6 | D5 | D4 | D3 | D2 | D1 | D0 |
|---|---|---|---|---|---|---|---|---|
| Kennung | X | | | | | | | |
| Empfang Fernkennzeichen | | X | | | | | | |
| Wahl | | | X | | | | | |
| Überwachungsspannung | | | | X | | | | |
| Auslösung | | | | | X | | | |
| Anruf | | | | | | X | | |
| Wählton liegt an | | | | | | | X | |
| Gebührenimpuls | | | | | | | | X |

2. Empfangen (E)

AD1

| | D7 | D6 | D5 | D4 | D3 | D2 | D1 | D0 |
|---|---|---|---|---|---|---|---|---|
| Wahlempfänger ein | | X | | | | | | |
| Leitung auf Beleg. überwachen | | | X | | | | | |
| Fernkennzeichenerkenner ein | | | | X | | | | |
| Leitungsüberwachung ein | | | | | X | | | |
| Wahlindikator ein | | | | | | X | | |
| OV an a-Ader | | | | | | | X | |
| 60V an b-Ader | | | | | | | | X |

AD2

| | D7 | D6 | D5 | D4 | D3 | D2 | D1 | D0 |
|---|---|---|---|---|---|---|---|---|
| Relais V | | X | | | | | | |
| Relais J | | | X | | | | | |
| Relais AS | | | | X | | | | |
| Besetztlampe | | | | | X | | | |
| Tondetektor sperren | | | | | | X | | |
| Relais D | | | | | | | | X |

|  |  | D7 | D6 | D5 | D4 | D3 | D2 | D1 | D0 |
|---|---|---|---|---|---|---|---|---|---|
| Einschalten |  | X |  |  |  |  |  |  |  |
| Ausschalten |  |  | X |  |  |  |  |  |  |
| 50 Hz | AD3 |  |  |  |  | X |  |  |  |
| 425 Hz |  |  |  |  |  |  | X |  |  |
| 560 Hz |  |  |  |  |  |  |  | X |  |
| | F 1 | X |  |  |  |  |  |  |  |
| | F 2 |  | X |  |  |  |  |  |  |
| | F 3 |  |  | X |  |  |  |  |  |
| MFV—Sign. | F 4 |  |  |  | X |  |  |  |  |
| (2 × 1 aus 4) | F 5 (AD4) |  |  |  |  | X |  |  |  |
| | F 6 |  |  |  |  |  | X |  |  |
| | F 7 |  |  |  |  |  |  | X |  |
| | F 8. |  |  |  |  |  |  |  | X |

Die in Fig. 3 gezeichnete Schaltungsanordnung für eine Leitungsübertragung Ue für Impulskennzeichen ermöglicht einem Teilnehmer der Vermittlungsstelle die Durchwahl zu einem Teilnehmeranschluß einer Fernsprechnebenstellenanlage ohne Mitwirkung eines Vermittlungsplatzes.

*Ankommende Belegung*

Die Belegung der Leitungsübertragung Ue über die Verbindungsleitung wird durch ein Signal auf der Ader b markiert, welches durch den über die in der Ruhelage befindlichen Kontakte as3 und as2 mit dieser Ader verbundenen Belegungserkenner BE empfangen wird. Dieser erzeugt ein Signal, welches über das Koinzidenzgatter G35 auf die Leitung D2 des Datenvielfachs DV zur Teilsteuereinrichtung TST gelangt. Dort erfolgt eine Kennzeichnung der betreffenden Leitungsübertragung als belegt. Die Teilsteuereinrichtung TST sendet daraufhin ein Codewort mit der Bedeutung "Anruf" an die Steuereinrichtung ST, wo ebenfalls eine Belegtkennzeichnung der betreffenden Leitungsübertragung Ue erfolgt. Aufgrund der Anrufmeldung von der Leitungsübertragung Ue sendet die Teilsteuereinrichtung TST einen Befehl zur Leitungsübertragung Ue, welche den Wahlempfänger WE, der über den in der Ruhelage befindlichen Kontakt as3 an der Ader a angeschlossen ist, aktivieren und die Besetztlampe BL einschalten. Die anschließend auf der Ader a eintreffenden Wahlimpulse in Form von Erdimpulsen werden von dem Wahlerkenner aufgenommen, wobei die Polaritätswechsel über die Leitung D5 an die Teilsteuereinrichtung TST weitergegeben werden. Dort findet eine Auswertung und Aufsummierung zur Erarbeitung der Ziffernwerte der einzelnen Ziffern statt, wobei die Ziffernwerte der gewählten Rufnummer in Form entsprechender Codeworte von der Teilsteuereinrichtung TST an die Steuereinrichtung ST weitergegeben werden. Mit diesen Informationen veranlaßt die Steuereinrichtung ST den Aufbau einer Verbindung zum gewünschten Teilnehmer T der Fernsprechnebenstellenanlage (s. Fig. 1). Ist der gewünschte Teilnehmer frei, so sendet die Steuereinrichtung ST ein Codewort mit der Bedeutung "Freiton" an die Teilsteuereinrichtung TST, welche ihrerseits die betreffende Leitungsübertragung ue durch einen entsprechenden Befehl veranlaßt, den Freitonsender S1 über den Koppler auf die Verbindungsleitung VL zu senden. Außerdem wird das Relais I zum Ansprechen gebracht. Ist der gewünschte Teilnehmer der Fernsprechnebenstellenanlage besetzt, dann

9

erfolgt stattdessen dei Aussendung des Besetzttones auf die Verbindungsleitung VL durch die Sendeeinrichtung S2 über den Koppler K durch einen Befehl der Teilsteuereinrichtung TST auf Veranlassung der Steuereinrichtung ST, die in diesem Fall ein Codewort mit der Bedeutung "Besetztton" übermittelt hat.

Sobald der gerufene Teilnehmer T der Fernsprechnebenstellenanlage aushängt, wird dies von der Steuereinrichtung ST auf nicht weiter beschriebene Weise erkannt, diese sendet darauf hin ein Codewort mit der Bedeutung "Gesprächszustand" an die Teilsteuereinrichtung TST. Die Teilsteuereinrichtung TST sendet anschließend Befehle an die Leitungsübertragung Ue, welche das Ansprechen des Relais D und damit durch das Schließen der Kontakte d1 u. d2 eine Durchschaltung des Sprechweges zur Folge hat. Außerdem wird die Einrichtung WK veranlaßt, durch Anlegen von Spannung an die Ader b der Verbindungsleitung VL der Vermittlungsstelle das Aushängen des gerufenen Teilnehmers der Fernsprechnebenstellenanlage mitzuteilen.

Handelt es sich bei der ankommenden Verbindung um eine Fernverbindung, so sendet die Vermittlungsstelle auf die Ader b der Vermittlungsleitung VL während der Übermittlung der Wahlinformation ein Signal, welches durch die Einrichtung FE erkannt wird. Diese Einrichtung ist über die in der Ruhelage befindlichen Kontakte as2 und as3 mit der Ader b der Vermittlungsleitung VL verbunden. Die Einrichtung FE sendet über das Koinzidenzgatter G38 ein Signal auf die Leitung D6 des Datenvielfachs DV zur Teilsteuereinrichtung TST. In der Teilsteuereinrichtung TST findet im Arbeitsspeicher eine entsprechende Kennzeichnung statt. Sobald von der Steuereinrichtung ST das Codewort mit der Bedeutung "Gesprächszustand" in der Teilsteuereinrichtung TST eintrifft, veranlaßt diese durch einen entsprechenden Befehl in der Leitungsübertragung Ue die Einrichtung WK zum Anlegen eines Signals an die Ader b der Verbindungsleitung, um auf diese Weise der Vermittlungsstelle ein Wahlendekennzeichen mitzuteilen. Alle Übrigen Vorgänge laufen in der bereits beschriebenen Weise ab.

Geht der gerufene Teilnehmer T der Fernsprechnebenstellenanlage in Rückfrage, so wird dies von der Steuereinrichtung ST erkannt, die darauf hin ein Codewort mit der Bedeutung "Rückfrage ein" an die Teilsteuereinrichtung TST sendet. Die Teilsteuereinrichtung TST veranlaßt darauf-hin in der Leitungsübertragung Ue den Koppler K, den Widerstand R an die Sprechadern a/b zu schalten. Dies geschieht, wie bereits beschrieben, aus übertragungstechnischen Gründen. Außerdem wird durch einen weiteren Befehl das Relais D abgeworfen, wodurch die Verbindung zwischen dem Teilnehmer T und der Verbindungsleitung VL aufgetrennt wird. Ist die Rückfrage beendet, so sendet wiederum die Steuereinrichtung ST ein Codewort mit der Bedeutung "Rückfrage aus" an die Teilsteuereinrichtung TST, die durch entsprechende Befehle die Abtrennung des Widerstandes R und das Ansprechen des Relais D veranlaßt. Hängt der Tilnehmer T der Fernsprechnebenstellenanlage ein, so wird dies durch die Steuereinrichtung ST erkannt, die daraufhin ein Codewort mit der Bedeutung "Auslösung" an die Teilsteuereinrichtung TST sendet. Durch entsprechende Befehle veranlaßt die Teilsteuerung TST in der Leitungsübertragung Ue den Abwurf der Relais D und I und die Aussendung eines Schlußzeichens auf die Ader b der Vermittlungsleitung VL durch die Einrichtung WK. Sobald das von der Vermittlungsstelle ausgesendete Auslösesignal auf der Vermittlungsleitung VL eintrifft und von der Einrichtung WK erkannt ist, erfolgt über das Gatter G32 die Übermittlung eines Signals über die Leitung D3 des Datenvielfachs DV zur Teilsteuereinrichtung TS, welche darauf hin die betreffende Leitungsübertragung Ue als frei in ihrem Arbeitsspreicher kennzeichnet. Durch einen entsprechenden Befehl an die Leitungsübertragung Ue wird die Besetztlampe BL zum Erlöschen gebracht. Die Leitungsübertragung Ue befindet sich damit wieder in der Ruhelage.

*Abgehende Belegung*

Es wird davon ausgegangen, daß der Teilnehmer T der Fernsprechnebenstellenanlage (s. Fig. 1) einen Teilnehmer einer an der Verbindungsleitung VL angeschlossenen Vermittlungsstelle erreichen will. Nach Empfang der vom Teilnehmer gewählten Verkehrsausscheidungskennziffer erkennt die Steuereinrichtung ST, daß eine abgehende Externverbindung gewünscht wird, worauf diese dann eine freie Leitungsübertragung Ue belegt und die Durchschaltung einer Verbindung von der Teilnehmerstation zur Leitungsübertragung Ue durch das Koppelfeld KF veranlaßt. Gleichzeitig sendet die Steuereinrichtung ST ein Codewort mit der Bedeutung "Belegung" an die Teilsteuereinrichtung TST, die durch Aussendung eines entsprechenden Befehls an die Leitungsübertragung Ue die Einrichtung UW zur Aussendung eines Belegungssignals über den in der Ruhelage befindlichen Kontakt as3 auf die Ader a der Verbindungsleitung VL veranlaßt. Sobald die Vermittlungsstelle die Belegung durch ein Signal auf der Ader b der Verbindungsleitung VL signalisiert hat, wird dies durch die Einrichtung BE erkannt und ein entsprechendes Signal über das Koinzidenzgatter G35 auf die Leitung D2 des Datenvielfachs DV gegeben. Die Teilsteuereinrichtung TS sendet darauf-hin mehrere Befehle an die Leitungsübertragung Ue, welche die Relais AS und I und die Besetztlampe BL einschalten und den nun mit den Sprechadern a/b der Verbindungsleitung VL verbundenen Tondecoder TD aktivieren. Sobald zum Zeichen der Wählaufforderung von der Vermittlungsstelle auf der Verbindungsleitung VL der Wählton eintrifft, sendet der Tondecoder TD ein entsprechendes Signal über das Koinzidenzgatter G34 auf die Leitung D1 des Datenvielfachs DV zur Teilsteuereinrichtung TST, welche anschließend ein entsprechendes Codewort zum Wahlabruf an die Steuereinrichtung ST sendet. Die anschließend von der Steuereinrichtung ST an die Teilsteuereinrichtung TST übermittelten Ziffern der auszusendenden Rufnummer werden in der Teilsteuereinrichtung ST abgespeichert und durch entsprechende Befehle in der Leitungsübertragung Ue durch impulsweise Erregung des Relais I in Form von Leitungsunterbrechungen auf die Ader a der Verbindungsleitung VL an die Vermittlungsstelle gegeben.

Während der Dauer einer Wahlimpulsserie wird außerdem durch einen Befehl das Relais V erregt. Nachdem die erste Ziffer auf die Verbindungsleitung VL ausgesendet worden ist, veranlaßt die Steuereinrichtung TST in der Leitungsübertragung Ue durch einen Befehl das Ansprechen des Relais D, welches die Sprechadern a/b durchschaltet. Damit ist der Teilnehmer T der Fernsprechnebenstellenanlage in der Lage, Hörtöne zur Kennzeichnung von Betriebszuständen während des Verbindungsaufbaues in der Vermittlungsstelle zu empfangen. Zur Vermeidung von Knackgeräuschen im Hörer kann während der Aussendung einer Wahlinformationsserie das Relais D wieder abgeworfen werden.

Die während des Gesprächs auf der Verbindungsleitung VL eintreffenden Gebührenimpulse werden von der Einrichtung GD aufgenommen und über das Koinzidenzgatter G31 auf die Leitung Do an die Teilsteuereinrichtung TST weitergegeben, welche darauf hin ein Codewort mit der Bedeutung "Gebührenimpuls" an die Steuereinrichtung ST weitergibt, wo eine Registrierung erfolgt, die in einer Auffsummierung in einem verbindungsindividuellen und einem teilnehmerindividuellen Speicher besteht.

Die Rückfrage und die Auslösung der Verbindung geschieht in der bereits beschriebenen Weise.

Dadurch, daß die Teilsteuereinrichtung TST in ihrem Arbeitsspeicher jeweils den Betriebszustand der Leitungsübertragungen Ue registriert hat, ist diese ohne weiteres in der Lage, zwischen einer ankommenden und einer abgehenden Belegung zu unterscheiden, ohne daß es hierzu einer besonderen Information der Steuereinrichtung ST bedarf. War die Leitungsübertragung bisher frei und meldet diese eine Belegung, so handelt es sich um eine ankommende Belegung. War die Leitungsübertragung bisher frei und kommt eine Belegungsmeldung in Form eines entsprechenden Codewortes von der Steuereinrichtung ST, so handelt es sich um eine abgehende Belegung.

Die beschriebene Anordnung zum Betrieben von Leitungsübertragungen durch Zwischenschaltung einer Teilsteuereinrichtung ist nicht nur auf Amtsübertragungen einer Fernsprechnebenstellenanlage beschränkt. Vielmehr können anstelle der Amtsübertragungen auch Querverbindungsübertragungen, Ansageeinrichtungen, Konferenzeinrichtungen, usw., treten.

Die Teilsteuereinrichtung TST wird zweckmäßigerweise als Mikroprozessor ausgebildet, wobei dieser auf einer individuellen Steckbaugruppe untergebracht ist. Die geringe Anzahl von Bauteilen für jeweils eine Leitungsübertragung ermöglicht ebenfalls die Unterbringung von einer oder auch zwei Leitungsübertragungen auf einer Steckbaugruppe. Die Steckbaugruppen sind in einem Baugruppenrahmen derart angeordnet, daß die Einbauplätze für die maximale Anzahl der von einer Teilsteuereinrichtung TST bedienbaren Leitungsübertragungen Ue bezüglich der Adress- und Datenleitungen verdrahtet sind.

**Patentansprüche**

1. Schaltungsanordnung für eine Fernsprechvermittlungsanlage mit verbindungsindividuellen Leitungsübertragungen (Ue) zur Aufnahme und Abgabe von Schaltkennzeichen, wobei jeweils mehrere Leitungsübertragungen (Ue) über gemeinsame Datenvielfachleitungen (Lv) mit einer fest zugeordneten Teilsteuereinrichtung (TST) verbunden sind, welche zur Übermittlung von Informationen über auf der jeweiligen Verbindungsleitung (VL) auftretende Schaltkennzeichen und zur Übermittlung von Befehlen zu den Leitungsübertragungen zur Abgabe von Schaltkennzeichen zur bzw. von der Teilsteuereinrichtung (TST) dienen, durch die Teilsteuereinrichtungen (TST), welche an einer übergeordneten Steuereinrichtung (ST) angeschlossen sind, eine Bearbeitung der eintreffenden Informationen vor ihrer Weitergabe an die übergeordnete Steuereinrichtung (ST) und umgekehrt stattfindet, und für eine Vielzahl von Arten von Verbindungsleitungen (VL) mit unterschiedlicher Kennzeichengabe unterschiedliche Leitungsübertragungen (Ue) und eine Art von Teilsteuereinrichtung (TST) vorgesehen ist, dadurch gekennzeichnet, daß die Teilsteuereinrichtung (TST) für die unterschiedlichen Arten von Leitungsübertragungen (Ue) eine universelle Schnittstelle zur übergeordneten Steuereinrichtung (ST) aufweist, wobei zusätzlich zu den Daten-Vielfachleitungen (DV) mehrere Adreßleitungen (AL) zum Ansteuern einer bestimmten Leitungsübertragung (Ue) vorgesehen sind, daß im Falle der Ansteuerung eine Rückmeldung durch die betreffende Leitungsübertragung (Ue) erfolgt, indem über die Datenvielfachleitung ein Kennwort an die Teilsteuereinrichtung (TST) gesendet wird, welches auf die Art der Leitungsübertragung (Ue) hinweist, daß die Übermittlung von Informationen von den Leitungsübertragungen (Ue) und Befehlen für die Leitungsübertragungen (Ue) zwischen den Teilsteuereinrichtungen (TST) und der Steuereinrichtung (ST) in Form von für alle Arten von Leitungsübertragungen einheitlichen Codeworten erfolgt, wobei in den Teilsteuereinrichtungen (TST) eine entsprechende Umwandlung durchgeführt wird, und daß in der Teilsteuereinrichtung (TST) die von den Leitungsübertragungen (Ue) eintreffenden Informationen in Codeworte bzw. die von der Steuereinrichtung (ST) eintreffenden Codeworte in Befehle für die Leitungsübertragungen (Ue) mit Hilfe einer in einem Speicher enthaltenen Tabelle umgesetzt werden.

2. Schaltungsanordnung nach Anspruch 1, dadurch gekennzeichnet, daß der Speicher die Tabelle für eine Art oder mehrere Arten von Leitungsübertragungen (Ue) enthält.

3. Schaltungsanordnung nach einem der Ansprüche 1 oder 2, dadurch gekennzeichnet, daß der Speicher als steckbarer Festwertspeicher ausgebildet ist.

4. Schaltungsanordnung nach Anspruch 1, dadurch gekennzeichnet, daß in der Leitungsübertragung (Ue) durch einen Schalter oder eine Drahtbrücke (BR) das als Rückmeldung auszusendende Kennwort veränderbar ist.

5. Schaltungsanordnung nach Anspruch 1, dadurch gekennzeichnet, daß die Rückmeldung des

# 0 095 675

Kennwortes durch Betätigung einer Sperrtaste (SP) in der betreffenden Leitungsübertragung (Ue) veränderbar ist.

**Revendications**

1. Circuit pour un central téléphonique comportant des joncteurs de lignes (Ue) prévus individuellement par liaison pour la réception et la livraison de caractéristiques de commutation, dans lequel plusieurs joncteurs de lignes (Ue) sont connectés à un dispositif de commande partielle fixe (TST) par l'intermédiaire de lignes de données multiples communes qui servent à la transmission d'informations relatives aux caractéristiques de commutation présentes sur chaque ligne de liaison (VL) et à la transmission d'ordres aux joncteurs de lignes en vue de la livraison de caractéristiques de commutation destinées au ou venant du dispositif de commande partielle (TST), les dispositifs de commande partielle (TST) étant connectées à un dispositif de commande hiérarchiquement prédominant (ST), un traitement des informations ayant lieu dans les dispositifs de commande partielle (TST) avant la transmission de ces informations au dispositif de commande prédominant (ST) et vice versa, et un traitement étant prévu pour plusieurs types de ligne de liaison (VL) avec des joncteurs de lignes différentes ayant des caractéristiques distinctes et pour un type de dispositif de commande partielle (TST), caractérisé en ce que le dispositif de commande partielle (TST), pour les différents types de joncteurs de lignes (Ue), forme un moyen de séparation universel en direction du dispositif de commande prédominant (ST), plusieurs lignes d'adresse (AL) pour la commande d'un joncteur de ligne déterminé (Ue) étant prévues en plus des lignes de données (DV), en ce que lorsqu'il est commandé, le joncteur de ligne concerné (Ue) produit un signal de retour dans lequel un mot de passe est envoyé sur la ligne de données vers le dispositif de commande partielle (TST), ce mot de passe indiquant le type du joncteur de ligne (ue), en ce que la transmission d'informations à partir des joncteurs de lignes (Ue) et la transmission d'ordres pour les joncteurs de lignes (Ue) se fait entre les dispositifs de commande partielle (TST) et le dispositif de commande prédominant (ST) sous forme de mots de code homogènes pour tous les types de joncteurs de lignes, une transformation correspondante étant effectuée dans les dispositifs de commande partielle (TST), et en ce que, dans le dispositif de commande partielle (TST), les informations venant des joncteurs de lignes sont converties en mots de code et les mots de code venant du dispositif de commande (ST) sont convertis en ordres pour les joncteurs de lignes (Ue) à l'aide d'un tableau contenu dans une mémoire.

2. Circuit selon la revendication 1, caractérisé en ce que la mémoire contient le tableau pour un ou plusieurs types de joncteur de ligne (Ue).

3. Circuit selon la revendication 1 ou 2, caractérisé en ce que la mémoire est réalisée sous forme d'une mémoire de constante fixe embrochable.

4. Circuit selon la revendication 1, caractérisé en ce que, dans le joncteur de ligne (Ue), le mot de passe à envoyer comme signal de retour est remplaçable par un commutateur ou un pont à fils (BR).

5. Circuit selon la revendication 1, caractérisé en ce que l'envoi du mot de passe comme signal de retour est remplaçable par l'action d'une touche d'arrêt dans le joncteur de ligne (Ue) concerné.

**Claims**

1. Circuit arrangement for a telephone exchange having individual trunk sets (Ue) for receiving and transmitting of switching signals whereby several trunk sets (Ue) each are connected via common multiple data lines (Lv) with a stationary associated sub control unit (TST), said data lines are used for the transmission of information to the sub control unit (TST) concerning the switching signals occurring on the trunk line and for the transmission of instructions from said sub control unit (TST) to the trunk sets for the transmission of switching signals, by said sub control units (TST) which are connected to a set-over control unit (ST), a processing of the incoming information is performed before its transmission to said set-over control unit (ST) and vice versa, and different trunk sets (Ue) and one type of sub control unit (TST) is provided for a plurality of types of trunk lines (VL) with different switching signals, characterized in that the sub control unit (TST) is provided with a universal interface to said set-over control unit (ST) for the different types of trunk sets (Ue), whereby to said multiple data lines additionally several address lines for the control of a certain trunk set (Ue) are provided that in case of a control an acknowledge signal is generated by the respective trunk set, which is performed by the transmission of an identification signal via the data lines to the sub control unit (TST) characterizing the type of trunk set (Ue), that the transmission of information from the trunk sets (Ue) and instructions for the trunk sets (Ue) between the sub control units (TST) and the set-over control unit is performed in form of code words being homogeneous for all types of trunk sets, whereby an appropriate conversion is performed within the sub control units (TST) and that the information from the trunk sets (Ue) are converted into code words respectively the code words from the control unit (ST) are converted into instructions for the trunk sets (Ue) within the sub control unit (TST) by means of a table contained in a memory.

2. Circuit arrangement according to claim 1, characterized in that the memory contains the table for one or more types of trunk sets (Ue).

12

**0 095 675**

3. Circuit arrangement according to claims 1 or 2, characterized in that the memory is a pluggable read only memory.

4. Circuit arrangement according to claim 1, characterized in that the identification signal can be altered by means of a switch or a jumper (B) in the trunk set (Ue).

5. Circuit arrangement according to claim 1, characterized in that the identification signal can be altered by means of a locking button in the respective trunk set (Ue).

# Fig.1

Fig.2

0 095 675

Fig. 3